# EUROPÄISCHE PATENTSCHRIFT

(11) **EP 0 653 275 B1**
(45) Veröffentlichungstag und Bekanntmachung des Hinweises auf die Patenterteilung: **04.02.1998**
(21) Anmeldenummer: 94117845.1
(22) Anmeldetag: 11.11.1994
(51) Int. Cl.: B27G 15/00, B23B 51/00

(54) **Bohrstift**
Drill
Foret

(30) Priorität: 11.11.1993 DE 4338545
(43) Veröffentlichungstag der Anmeldung: 17.05.1995
(73) Patentinhaber: Sanipa GmbH Badeinrichtungen, D-91757 Treuchtlingen (DE)
(72) Erfinder: Böhm, Simon, D 85072 Eichstädt (DE); Drexl,Werner, D 91757 Treuchtlingen (DE)
(74) Vertreter: Hafner, Dieter, Dr.rer.nat., Dipl.-Phys.

(56) Entgegenhaltungen:
- CH-A- 588 854
- DE-C- 4 115 030
- DE-U- 8 703 339
- US-A- 4 127 355
- US-A- 4 471 581
- US-A- 4 789 276

## Beschreibung

Die Erfindung betrifft einen Bohrstift, insbesondere für Holz und Holzwerkstoffe, nach dem Oberbegriff des Patentanspruchs 1.

Bohrwerkzeuge sind in vielfältiger Form bekannt. Im folgenden sind einige Formen und ihre Nachteile beim Bohren in Holz oder Holzwerkstoffe erläutert:
1. Spiralbohrer mit Dachformspitze und Freiflächen an den Nebenschneiden (Maschinenbohrer nach DIN 7487)
   a) Die Spannuten sind nicht geeignet, die anfallenden Späne aus dem Bohrloch zu transportieren, bereits bei relativ geringen Bohrlochtiefen sind Rückholtakte nötig.
   b) Die abhebende Wirkung der Schneiden, vor allem der Schneidkanten, führt zu Ausrissen an der Oberfläche, allerdings zu sauberen Austrittskanten bei Durchgangsbohrungen.
   c) Der geringe Anteil des Materials am Querschnitt führt zu Vibrationen und Verformungen des Bohrwerkzeuges. Dieses wird aufgrund der Freiflächen an den Nebenschneiden nicht genügend stabilisiert, was zu Ausrissen und zu unrunden Löchern führt. Vor allem bei kleinen Durchmessern sind kaum befriedigende Vorschübe und Qualitäten zu erzielen.
   d) In der Mitte wird der Spanwinkel negativ (bei ausgespitzten Bohren) bzw. zur stumpfen, schabenden Schneide. Das verursacht einen hohen Kraftbedarf, begrenzt den Vorschub und destabilisiert den Bohrer, was vor allem bei hohen Vorschüben und beim Bohren in inhomogenem Material unrunde Löcher mit wechselnden Durchmessern erzeugt.
2. Ein- und zweischneidige Spiralbohrer mit Zentrierspitze und Vorschneider (z.B. Holzbohrer nach DIN 7487)
   a) Die Spannuten sind nicht geeignet, die anfallenden Späne aus dem Bohrloch zu transportieren, bereits bei relativ geringen Bohrlochtiefen sind Rückholtakte nötig.
   b) Zentrierspitze und Vorschneider ritzen bzw. schaben. Das führt zu hohem Kraftbedarf bei Vorschub und Drehmoment mit steilem Anstieg und Abfall, Verschleiß der Bohreinrichtung, Blockierneigung bei Handbetrieb (bei größeren Durchmessern mit entsprechender Unfallgefahr), außerdem geringer Standzeit, kraterförmig aufgebeulten Bohrungsrädern bei dafür anfälligen Werkstoffen und ungenauen Passungen je nach Schärfe der Vorschneider.
3. Zylinderkopf- und Forstnerbohrer ohne Vorschneider
   a) Zylinderkopf- und Forstnerbohrer sind für kleine Durchmesser nicht herstellbar (üblich sind Durchmesser ab 10 mm).
   b) Die abhebende Wirkung der Schneiden, vor allem der Schneidenkanten, führt zu Ausrissen an der Oberfläche, allerdings zu sauberen Austrittskanten bei Durchgangsbohrungen.
   c) Eine exakte Zentrierung ist meist schwierig.
   d) In der Mitte wird der Spanwinkel negativ (bei ausgespitzten Bohren) bzw. zur stumpfen, schabenden Schneide. Das verursacht einen hohen Kraftbedarf, begrenzt den Vorschub und destabilisiert den Bohrer, was vor allem bei hohen Vorschüben und beim Bohren in inhomogenem Material unrunde Löcher mit wechselnden Durchmessern erzeugt.
4. Zylinderkopf- und Forstnerbohrer mit Vorschneider (DIN 7483)
   a) Zylinderkopf- und Forstnerbohrer sind für kleine Durchmesser nicht herstellbar (üblich sind Durchmesser ab 10 mm).
   b) Zentrierspitze und Vorschneider ritzen bzw. schaben. Das führt zu hohem Kraftbedarf bei Vorschub und Drehmoment mit steilem Anstieg und Abfall, Verschleiß der Bohreinrichtung, Blockierneigung bei Handbetrieb (bei größeren Durchmessern mit entsprechender Unfallgefahr) außerdem geringer Standzeit, kraterförmig aufgebeulten Bohrungsrändern bei dafür anfälligen Werkstoffen und ungenauen Passungen je nach Schärfe der Vorschneider.

Aus CH-A-588 854 ist ein Bohrer gemäß dem Oberbegriff des erfindungsgemäßen Patentanspruchs 1 bekannt. Dabei handelt es sich um einen Bohrer, bei dem der Bohrstift eine zylindrische Form mit einer Grundschneide sowie eine gerade Spannut aufweist, die im Querschnitt bis ins Zentrum des Bohrstifts reicht. Der Bohrer ist für den chirurgischen Einsatz vorgesehen.

Der Erfindung liegt die Aufgabe zugrunde, einen Bohrstift zu schaffen, der bei hohen Vorschüben qualitativ hochwertige, paßgenaue Bohrungen in Holz und Holzwerkstoffe, auch bei kleinen Durchmessern und in spröden oder elastischen Oberflächen, erzeugt.

Diese Aufgabe wird durch die kennzeichnenden Merkmale des Patentanspruchs 1 gelöst. Vorteilhafte Ausführungsformen sind in den Unteransprüchen 2 - 7 beansprucht.

Der erfindungsgemäß ausgestaltete Bohrstift hat die folgenden Vorteile:
1. Präzise Bohrungen bei hohen Vorschüben, auch bei kleinen Durchmessern und spröden Oberflächen:
   a) Durch die im wesentlichen zylindrische Form über die gesamte Länge und den fehlenden Freiwinkel der Nebenschneide kann sich der Bohrstift mit seinem Körper an der Bohrungswand abstützen. Dadurch wird eine gute Stabilisierung während des Bohrvorgangs erreicht.
   b) Der Materialanteil am Querschnitt ist wesentlich höher als bei einem 1-, 2- oder 3-gängigen Spiralbohrer, so daß der erfindungsgemäße Bohrstift eine höhere Stabilität aufweist.
   c) Der Schnittwinkel von 90° erzeugt keine abhebende Wirkung an der Werkstückoberkante. Die Kante der Grundschneide schabt nicht, sondern schneidet. Dadurch werden Ausrisse bzw. Verwerfungen des Bohrungsrandes verhindert.
2. Auch bei tiefen Bohrungen sind keine Rückholtakte erforderlich, weil die gerade Spannut die anfallenden Späne sauber und mit geringem Widerstand aus dem Bohrloch abführt.
3. Die einfache, lötfreie Form sowie der ausreichend große Keilwinkel der Schneide lassen die Verwendung von Hartmetall zu, so daß eine lange Standzeit gewährleistet ist.
4. Die einfache, einteilige, zylindrische Form und die gerade Spannut halten den Herstellungsaufwand und damit die Herstellungskosten auch bei kleinen Stückzahlen und bei Verwendung von Hartmetall gering.

In der nachfolgenden Beschreibung ist ein Ausführungsbeispiel eines erfindungsgemäß ausgebildeten Bohrstiftes anhand von Zeichnungen näher erläutert: Es zeigen:
- Fig. 1: eine Ansicht des Bohrstifts,
- Fig. 2: ein Schnitt A-A nach Fig. 1 sowie
- Fig. 3: eine Ansicht B nach Fig. 1.

Es handelt sich um einen Bohrstift (1) aus Hartmetall mit einem Durchmesser von 3 mm und einer Nutlänge von 15 mm zum Bohren von 10 mm tiefen Sacklöchern in melaminbeschichtete Spanplatten.

Bei einer Drehzahl von 4.200/min und einem Vorschub von 1.500 mm/min werden exakte Bohrungen mit ausrißfreie Rändern erzeugt. Bei einem Vorschub von 5.000 mm/min werden auch noch exakt runde Bohrungen erzeugt, allerdings treten dann in der Beschichtung Ausrisse auf.

Nach etwa 120.000 Bohrungen läßt die Qualität der Bohrungslochkanten etwas nach, die Passung bleibt jedoch erhalten. Die Lebensdauer des Bohrstiftes (1) liegt je nach Qualitätsansprüchen und Werkstückbeschichtung bei 120.000 bis 200.000 Bohrungen.

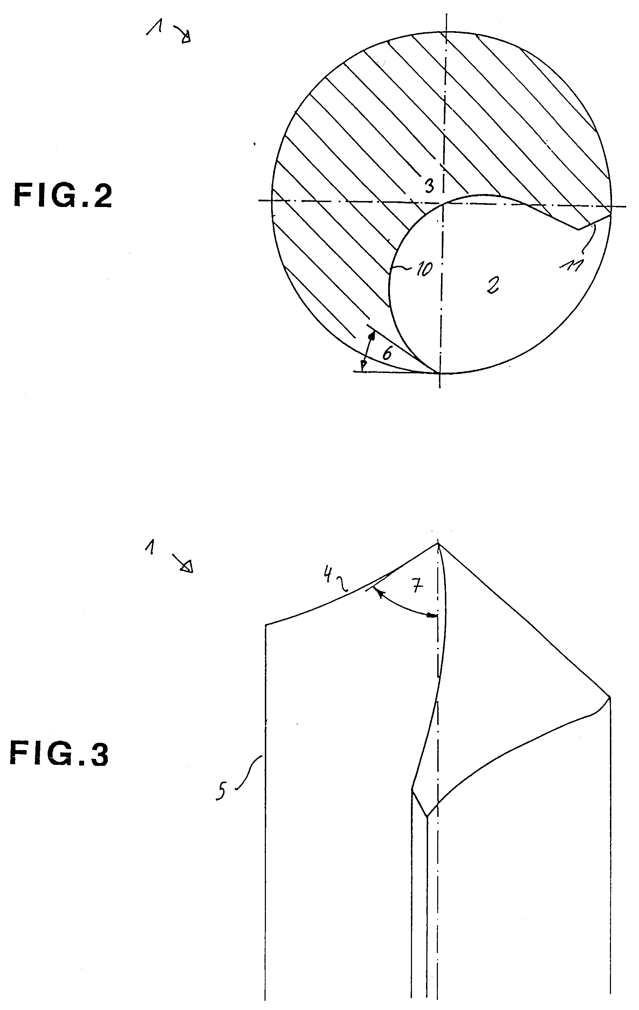

Der Spitzenwinkel (7) nach Fig. 3 liegt für diesen Anwendungsfall in einem Bereich zwischen 60° und 75° um eine gute Anfangszentrierung zu erreichen.

Der Keilwinkel (6) der Nebenschneide (5) liegt bei ca. 32°. Er muß bei Werkstücken mit hohen Festigkeiten größer sein (45° oder größer) um Ausbrüche zu vermeiden.

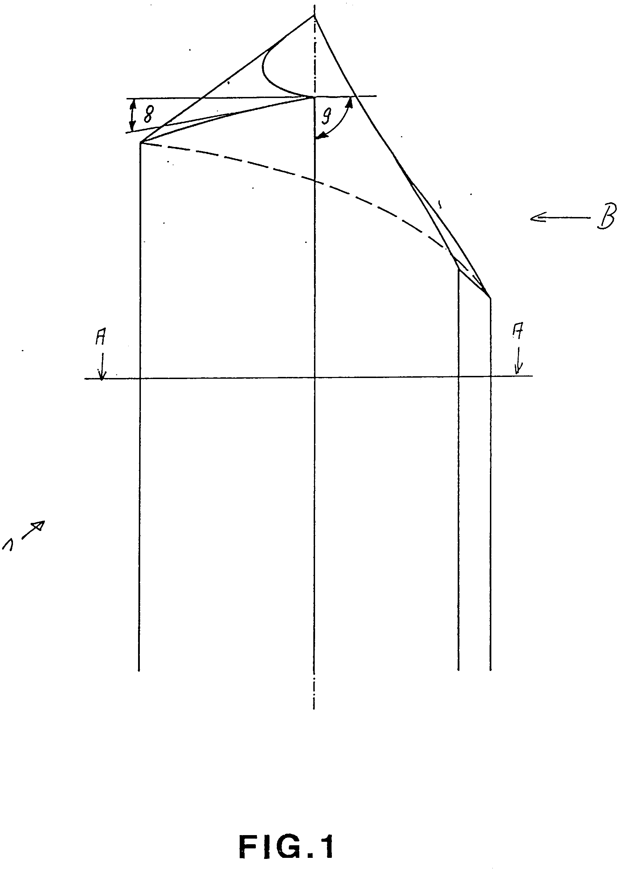

Der Freiwinkel (8) der Grundschneide (4) aus Fig. 1 ist abhängig von Drehzahl und Vorschub. Er soll im Bereich von 5° bis 12° liegen. Beim Ausführungsbeispiel beträgt er 8,7°.

Desweiteren ist der Schnittwinkel (9) der Grundschneide (4) aus Fig. 1 entnehmbar.

### BEZUGSZEICHENLISTE

- 1: Bohrstift
- 2: Spannut
- 3: Zentrum
- 4: Grundschneide
- 5: Nebenschneide
- 6: Keilwinkel der Nebenschneide
- 7: Spitzenwinkel
- 8: Freiwinkel der Grundschneide
- 9: Schnittwinkel der Grundschneide
- 10: abgerundeter Bereich
- 11: gerader Bereich

## Patentansprüche

1. Bohrstift zum Herstellen von präzisen Bohrungen, bei dem der Bohrstift (1) eine zylindrische Form mit einer Grundschneide (4) sowie eine gerade Spannut (2) aufweist, die im Querschnitt bis ins Zentrum (3) des Bohrstifts (1) reicht,
**dadurch gekennzeichnet, daß**
die Spannut (2) im Querschnitt abgerundet ausgebildet ist, derart, daß am zylindrischen Bohrerschaft eine Nebenschneide (5) mit einem spitzen Keilwinkel (6) entsteht.

2. Bohrstift nach Anspruch 1,
**dadurch gekennzeichnet, daß**
die Spannut (2) einen geraden Bereich (11) aufweist.

3. Bohrstift nach einem der vorhergehenden Ansprüche,
**dadurch gekennzeichnet, daß**
der abgerundete Bereich (10) der Spannut (2) halbkreisförmig ausgebildet ist.

4. Bohrstift nach einem der vorhergehenden Ansprüche,
**dadurch gekennzeichnet, daß**
daß die Oberfläche des Bohrstifts (1) mit einer Oberflächenbeschichtung versehen ist.

5. Bohrstift nach einem der vorhergehenden Ansprüche,
**dadurch gekennzeichnet, daß**
der Spitzenwinkel (7) des Bohrstifts (1) in einem Bereich zwischen 60° - 75° liegt.

6. Bohrstift nach einem der vorhergehenden Ansprüche,.
**dadurch gekennzeichnet, daß**
der Freiwinkel (8) der Grundschneide (4) in einem Bereich zwischen 5° - 12° liegt.

7. Bohrstift nach einem der vorhergehenden Ansprüche,
**dadurch gekennzeichnet, daß**
der Bohrstift (1) aus Hartmetall besteht.

## Claims

1. Drill bit for the production of precise bores, therein the drill bit (1) has a cylindrical shape with a primary cutting edge (4) and also has a straight chip groove (2) which, in cross-section, extends as far as into the centre (3) of the drill bit (1), characterised in that the chip groove (2) is rounded in cross-section in such a manner that a secondary cutting edge (5) having an acute cutting angle (6) is formed on the cylindrical drill shank.

2. Drill bit according to Claim 1, characterised in that the chip groove (2) has a straight region (11).

3. Drill bit according to either of the preceding Claims, characterised in that the rounded region (10) of the chip groove (2) is semi-circular.

4. Drill bit according to any one of the preceding Claims, characterised in that the surface of the drill bit (1) is provided with a surface coating.

5. Drill bit according to any one of the preceding Claims, characterised in that the acute angle (7) of the drill bit (1) lies within a range of from 60° to 75°.

6. Drill bit according to any one of the preceding Claims, characterised in that the clearance angle (8) of the primary cutting edge (4) lies within a range of from 5° to 12°.

7. Drill bit according to any one of the preceding Claims, characterised in that the drill bit (1) is composed of hard metal.

## Revendications

1. Foret pour réaliser des perçages de précision, selon lequel le foret (1) présence une forme cylindrique avec un tranchant principal (4) et une goujure rectiligne (2) s'étendant, vue en coupe transversale, jusque dans l'âme (3) du foret (1), caractérise en ce que la goujure (2) vue en coupe transversale est réalisée arrondie, de telle sorte qu'il se forme sur la tige cylindrique un tranchant secondaire (5) présentant un angle aigu (6).

2. Foret selon la revendication 1, caractérisé en ce que la goujure (2) présente une partie rectiligne (11).

3. Foret selon l'une des revendications précédentes, caractérisé en ce que la partie arrondie (10) de la goujure (2) est réalisée en forme de demi-cercle.

4. Foret selon l'une des revendications précédentes, caractérisé en ce que la surface du foret (1) est munie d'un revêtement.

5. Foret selon l'une des revendications précédentes, caractérisé en ce que l'angle du sommet (7) du foret (1) se situe entre 60° et 75°.

6. Foret selon l'une des revendications précédentes, caractérisé en ce que la dépouille (8) du tranchant principal (4) se situe entre 5° et 12°.

7. Foret selon l'une des revendications précédentes, caractérisé en ce que le foret (1) est composé de métal dur.
